# EUROPÄISCHE PATENTSCHRIFT

(11) **EP 2 807 723 B1**
(45) Veröffentlichungstag und Bekanntmachung des Hinweises auf die Patenterteilung: **06.05.2020**
(21) Anmeldenummer: 13701269.6
(22) Anmeldetag: 25.01.2013
(51) Int. Cl.: B29C 43/14, H02K 15/03, H01F 41/02, B29C 43/36, B29C 43/00, B29C 43/18, B29K 505/12

(54) **VERFAHREN ZUR AUSKLEIDUNG EINES HOHLKÖRPERS MIT EINEM GEPRESSTEN FORMKÖRPER**
METHOD FOR COATING A HOLLOW BODY WITH COMPACTED MOULDING
PROCEDE DE RECOUVREMENT DE CORPS CREUX AVEC UN CORPS EN POUDRE COMPRIMÉE

(30) Priorität: 27.01.2012 DE 102012100693
(43) Veröffentlichungstag der Anmeldung: 03.12.2014
(73) Patentinhaber: MS-Schramberg Holding GmbH & Co. KG, 78713 Schramberg (DE)
(72) Erfinder: BLESSING, Werner, 78730 Lauterbach (DE); BROGHAMMER, Reinhold, 78144 Schramberg (DE); TRAMNITZ, Gerd, 78664 Eschbronn (DE)
(74) Vertreter: Fleck, Hermann-Josef
(86) Internationale Anmeldenummer: PCT/EP2013/051434
(87) Internationale Veröffentlichungsnummer: WO 2013/110755

(56) Entgegenhaltungen:
- WO-A1-2006/001304
- DE-A1- 19 728 418
- US-A- 4 713 877
- US-A- 5 495 658
- US-A1- 2006 110 484
- DATABASE WPI Week 201170 Thomson Scientific, London, GB; AN 2011-M88977 XP002696547, -& WO 2011/126026 A1 (AICHI STEEL CORP) 13. Oktober 2011 (2011-10-13)
- DATABASE WPI Week 200418 Thomson Scientific, London, GB; AN 2004-188101 XP002696548, -& JP 2004 064834 A (DAIDO DENSHI KK) 26. Februar 2004 (2004-02-26)

## Beschreibung

Die Erfindung bezieht sich auf ein Verfahren zur Auskleidung der Innenfläche eines Hohlkörpers mit einem aus pulverförmigem Material gepressten Formkörper, bei dem das mit einem Bindemittel versehene pulverförmige Material magnetische Pulverteilchen umfasst und in den Pressraum einer Matrize gefüllt und darin gepresst wird.

Die WO 2006/001304 A1 zeigt ein Verfahren zur Auskleidung eines Hohlkörpers mit einem gepressten Formkörper für einen Elektromotor. Hierbei wird ein mit einem Bindemittel versehenes pulverförmiges Material mit Seltenerd-Magnetmaterial in den Pressraum einer Matrize gefüllt, zwischen einem Unterstempel und einem Oberstempel gepresst und anschließend in einen koaxial zu dem Pressraum aufgesetzten Hohlkörper geschoben, in dem sich der gepresste Formkörper ausdehnt und kraftschlüssig fixiert wird.

Ein weiteres Verfahren zur Auskleidung der Innenfläche eines Hohlkörpers mit einem aus pulverförmigem Material gepressten Formkörper dieser Art ist in der WO 2011/126026 A1 angegeben. Bei diesem bekannten Verfahren wird das pulverförmige Material, das mit einem wärmehärtbaren Bindemittel versehen ist, in eine Form gepresst und in der Form erwärmt. Anschließend wird der erwärmte röhrenförmige Formkörper in ein röhrenförmiges Gehäuse mit geringerem Durchmesser gepresst. Infolge der Erwärmung und des umfangsseitigen Einpressens dehnt sich der geformte röhrenförmige Magnet unter der nachfolgenden Härtebehandlung mehr als erwartet aus, wodurch sich der gebundene röhrenförmige Magnet und das Gehäuse durch Anpressen sicher verbinden.

Ein weiteres Verfahren ist in der EP 1 818 955 A1 angegeben. Hierbei wird pulverförmiges Magnetmaterial, dem ein Bindemittel in Form eines Epoxidharzes beigemischt ist, in einer Form unter Erwärmung bei hohem Druck gepresst, wobei der Hochdruckverpressung ein Pressschritt mit leichtem Pressdruck vorangehen kann. Der unter hohem Pressdruck geformte Formkörper wird einer thermischen Behandlung unterzogen, wobei eine weitgehende Aushärtung des Epoxidharzes eintritt.

Danach wird der ausgehärtete Formkörper an einem Positionierring eines Presszylinders angeordnet und anschließend bis an die Glasübergangstemperatur angewärmt, so dass die Verbindung zwischen dem Magnetpulver und dem Epoxidharz und des Harzgerüsts bestehen bleibt, jedoch eine genügende Deformation ermöglicht wird, um den Formkörper durch Pressen in das Gehäuse einzusetzen (s. Abs. [0048], [0049]). Während des Einführens des kunststoffgebundenen Magneten in das Gehäuse wird auf der Innenseite des kunststoffgebundenen magnetischen Formkörpers eine Beschichtung aufgesprüht (s. Abs. [0055]). Das Einbringen des Formkörpers in den zylindrischen Hohlkörper erfolgt somit über mehrere genau einzuhaltende Schritte und damit verbundenen Verweildauern.

Auch die US 5,495, 658 zeigt ein Verfahren zur Herstellung eines zylindrisch geformten Magnetkörpers aus gepresstem pulverförmigen Material, das ein unter Wärme aushärtbares Bindemittel enthält. Auch die JP 2004 064 834 A zeigt ein ähnliches Verfahren.

Ein weiteres Verfahren zum Einbringen eines magnetischen Formkörpers in einen hülsenförmigen Hohlkörper ist in der WO 2010/066455 A1 gezeigt. Hierbei wird pulverförmiges Material in eine mit einer Kappe versehene Hülse gefüllt, die sodann mit einer zweiten Kappe verschlossen wird. Anschließend wird auf mindestens eine Kappe ein Druck aufgebracht, um das magnetische Pulvermaterial zu pressen. Bei

Ein Verfahren zur Auskleidung der Innenfläche eines Hohlkörpers mit einem aus pulverförmigem Material gepressten Formkörper dieser Art ist in der WO 2011/126026 A1 angegeben. Bei diesem bekannten Verfahren wird das pulverförmige Material, das mit einem Bindemittel versehen ist, in eine Form gepresst und erwärmt. Anschließend wird der erwärmte röhrenförmige Formkörper in ein röhrenförmiges Gehäuse gepresst. Infolge der Erwärmung dehnt sich der geformte röhrenförmige Magnet mehr als erwartet aus, wodurch sich der gebundene röhrenförmige Magnet und das Gehäuse durch Anpressen sicher verbinden.

Auch die US 5,495, 658 zeigt ein Verfahren zur Herstellung eines zylindrisch geformten Magnetkörpers aus gepresstem pulverförmigen Material, das ein unter Wärme aushärtbares Bindemittel enthält. Auch die JP 2004 064 834 A zeigt ein ähnliches Verfahren.

dieser Vorgehensweise spielen also die Kappen in Verbindung mit der Hülse für das Einbringen und Verpressen eine wichtige Rolle.

In der EP 1 237 261 B1 ist ein Verfahren zur Herstellung eines gekapselten Rotors eines Permanentmagnetmotors offenbart, bei dem eine Welle mit einem Vorformling, der später einen Magneten bildet, mit einem diesen umgebenden Blechmantel in ein Presswerkzeug eingelegt wird, wonach der Vorformling durch stirnseitige Druckbeaufschlagung so verformt wird, dass er innen an der Welle kraftschlüssig anliegt.

Bei einem in der DE 20 2008 017 587 U1 gezeigten Rotor wird ein auf einer Weile angebrachter Permanentmagnet mit einer dichten Umkapselung versehen.

Der Erfindung liegt die Aufgabe zugrunde, ein Verfahren der eingangs genannten Art bereit zu stellen, mit dem die Auskleidung mit unterschiedlichen Formkörpern effizient durchführbar ist.

Diese Aufgabe wird mit den Merkmalen des Anspruches 1 gelöst. Hierbei ist vorgesehen, dass das Pressen zwischen einem Unterstempel und einem Oberstempel durchgeführt wird, dass vor oder nach dem Pressen der Hohlkörper bei in der Matrize befindlichem Formkörper bezüglich einer axialen Projektion den Pressraum mit seiner Innenfläche umfangsseitig umgebend über der Matrize positioniert wird, dass anschließend der gepresste Formkörper mittels des Unterstempels in den Hohlraum geschoben wird und dass der Formkörper durch sein Entspannen an der Innenfläche kraftschlüssig fixiert wird. Sind die Prozessparameter der Maschine so eingestellt, wird eine qualitativ hochwertige Auskleidung bei exakter Steuerbarkeit der Fertigungsschritte erreicht. Die Formkörper werden dabei stabil in den Hohlkörper eingefügt. Beim Pressvorgang wird der Unterstempel in einer festen Position gehalten der alternativ gleichzeitig mit dem Oberstempel gesteuert bewegt, wie es mit einer mehrachsigen Pressmaschine möglich ist.

Ein Bauteil mit magnetischen Eigenschaften lässt sich vorteilhaft durch das Verfahren zur Auskleidung eines Hohlkörpers mit einem magnetischen Formkörper erzielen, wobei das pulverförmige Material magnetische Pulverteilchen umfasst.

Das erfindungsgemäße Verfahren besteht darin, dass das pulverförmige Material außer den magnetischen Pulverteilchen Eisenpulver umfasst, wobei ein 2-Phasen-Pressen zwischen dem Unterstempel und dem Oberstempel durchgeführt wird, indem in einem ersten Schritt die magnetischen Pulverteilchen mit dem Bindemittel vorverdichtet werden, in einem weiteren Schritt das Eisenpulver mit dem Bindemittel vorverdichtet wird und in einem nachfolgenden Schritt das Pressen des Formkörpers unter Endverdichtung der vorverdichteten Teile erfolgt und der Formkörper in den Hohlkörper eingefügt wird.

Zu einer hohen Qualität der Auskleidung tragen dabei die Maßnahmen bei, dass beim Einschieben mit dem Unterstempel der Oberstempel mit Gegendruck auf dem Formkörper gehalten wird. Auf diese Weise lässt sich bei beidseitig offenen Hohlköpern, insbesondere Hülsen, der Formkörper, stabil einfügen.

Eine weitere vorteilhafte Maßnahme, die auch bei auf dem Formkörper gehaltenen Oberstempel oder ohne diese Maßnahme angewandt werden kann, besteht darin, dass der Pressraum nach innen von einem Innenteil begrenzt ist und dass der gepresste Formkörper mittels des Unterstempels in den Hohlraum geschoben wird, wobei das Innenteil mit dem gepressten Formkörper mitbewegt und erst nach dem Einfügen des Formkörpers in den Hohlkörper aus dem Formkörper entfernt wird.

Der Fertigungsvorgang wird dabei dadurch begünstigt, dass das Einschieben des Formkörpers unter Wirkung eines Gleitmittels durchgeführt wird.

Ferner tragen zu einem genau eingehaltenen Verfahrensablauf die Maßnahmen bei, dass als Gleitmittel ein dem pulverförmigen Material von vornherein zugegebenes Gleitmittel genutzt wird, mit dem auch eine innere Reibung zwischen den Pulverteilchen verringert wird.

Für die Herstellung der Auskleidung sind des Weiteren die Maßnahmen von Vorteil, dass als Bindemittel ein Epoxydharz verwendet wird, das die pulverförmigen Materialteilchen umhüllt oder mit diesen vermischt ist.

Die Festlegung des Formkörpers in dem Hohlkörper kann dadurch ergänzt werden, dass der Formkörper zusätzlich formschlüssig mittels an der Innenfläche des Hohlkörpers vorhandener Rauigkeit oder gebildeter griffiger Strukturen fixiert wird. Die Rauigkeit oder griffige Struktur wird dabei auf die Eigenschaft des Formkörpers, z. B. dessen Pressdichte, Zusatz von Gleitmittel, abgestimmt. Befinden sich auf der Innenfläche vertiefte Strukturen, so kann z. B. durch Nachverpressen zusätzlich bewirkt werden, dass sich der Formkörper mit seiner Außenfläche in diese einsetzt. Die Nachverpressung ist dabei insbesondere bei als Hülsen ausgebildeten Hohlkörpern einfach steuerbar, da lediglich die noch an dem Formkörper anliegenden Stempel zur Druckbeaufschlagung angesteuert werden müssen. Dies kann z. B. mit einfachen Programmschritten erreicht werden.

Die kraftschlüssige Fixierung des Formkörpers in dem Hohlkörper kann erfindungsgemäß dadurch definiert angepasst werden, dass die Entspannung durch die Pressdichte beeinflusst wird.

Dabei bestehen verschiedene Steuerungsmöglichkeiten darin, dass die Pressdichte in Abhängigkeit der Größe der Pulverteilchen, des Anteils an Epoxidharz, des Anteils an Bindemittel, des Anteils an Gleitmittel oder einer Kombination aus mindestens zweien dieser Bestandteile gewählt wird.

Weitere vorteilhafte Ausgestaltungsmerkmale für eine definierte Durchführung des Verfahrens bestehen darin, dass die Pressdichte des Formkörpers anhand des Gesamtgewichts aus Hohlkörper und Formkörper bei bekanntem oder zuvor gemessenem Gewicht des Hohlkörpers festgestellt wird.

Hierbei tragen zu einer zuverlässigen Durchführung des Verfahrens die Maßnahmen bei, dass die Pressdichte unter Vergleich mit einer Soll-Pressdichte überwacht, geregelt oder nachjustiert wird.

Weitere vorteilhafte Ausgestaltungen des Verfahrens bestehen darin, dass im Anschluss an das Fixieren des Formkörpers in dem Hohlkörper ein Aushärtevorgang mittels Erwärmung und/oder UV-Bestrahlung durchgeführt wird.

Hierbei bestehen verschiedene vorteilhafte Gestaltungsvarianten darin, dass die Erwärmung in einem Ofen durch Wärmestrahlung, Konvektion und/oder Wärmeleitung oder induktiv vorgenommen wird.

Ein vorteilhaftes Ausführungsbeispiel besteht dabei darin, dass der Hohlkörper eine Hülse zumindest mit einem zylinderförmigen Hohlraum ist.

Ein für zahlreiche Einsatzfälle vorteilhaftes Funktionsteil besteht in einem Hohlkörper, bei dem ein Formkörper nach einem der in den Verfahrensansprüchen angegebenen Verfahren eingefügt ist.

Dabei besteht eine für die Funktion vorteilhafte Ausführung darin, dass in den Formkörper ein Eisenkern eingesetzt ist.

Die Erfindung wird nachfolgend anhand von Ausführungsbeispielen unter Bezugnahme auf die Zeichnungen näher erläutert. Es zeigen:
- Fig. 1: einen Verfahrensschritt vor einem Pressen des Formkörpers bei in eine Matrize eingefülltem pulverförmigem Material in schematischer Darstellung,
- Fig. 2: das Pressen des Formkörpers in der Matrize und
- Fig. 3: das Einfügen des Formkörpers in einen Hohlkörper.

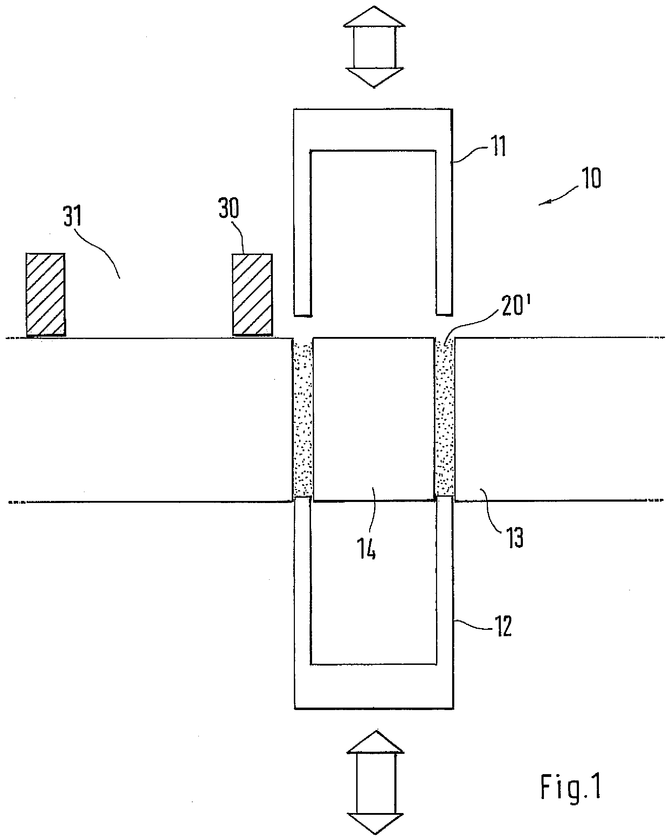

In den Fig. 1 bis 3 sind verschiedene Verfahrensschritte zum Auskleiden der Innenfläche eines Hohlkörpers 30 mit einem aus Pulvermaterial 20' gepressten Formkörper 20 (Pressling) in einer Pressmaschine 10 dargestellt. Bei dem Pressling handelt es sich um einen kunststoffgebundenen Formkörper. Der Hohlkörper 30 ist bei dem Ausführungsbeispiel als Hülse ausgebildet.

Fig. 1 zeigt das in eine Matrize 13 der Pressmaschine 10 eingefüllte pulverförmige Material 20', dem als Bindemittel Kunststoff, vorzugsweise ein Epoxidharz, zugesetzt ist, wobei die einzelnen Pulverteilchen von dem Kunststoff umhüllt sein können und/oder Kunststoffteilchen homogen zugemischt sind. Außerdem ist dem puiverförmigen Material 20' ein Gleitmittel beigemischt, mit dem die innere Reibung zwischen den Teilchen beim Pressen verringert und auch die äußere Reibung an umgebenden Wandflächen sowohl beim Pressen selbst als auch beim Ausschieben aus der Matrize 13 verringert wird.

Wie aus Fig. 1 ersichtlich, ist das pulverförmige Material 20' mit den genannten weiteren Bestandteilen mittels einer (nicht gezeigten) Fülleinheit in die Matrize 13 gefüllt, die von unten von der zugekehrten Oberseite eines Unterstempels 12 abgeschlossen ist. Der in der Matrize 13 gebildete Füllraum (bzw. Pressraum), der nach innen von einem Innenteil 14 begrenzt wird, hat bei dem gezeigten Ausführungsbeispiel einen ringförmigen, beispielsweise kreisringförmigen Querschnitt, so dass der gepresste Formkörper 20 die Form eines Hohlzylinders erhält. Alternativ können auch andere Formkörper hergestellt werden, wie z. B. solche mit polygonalem (dreieckig, viereckig ...) oder elliptischem Querschnitt oder dgl.. Die Formkörper können über ihren Querschnitt auch ausgefüllt sein. Das pulverförmige Material 20' ist z. B. magnetisches Pulvermaterial mit isotropen oder anisotropen Eigenschaften, hartmagnetisch oder weichmagnetisch.

Das in die Matrize 13 eingefüllte pulverförmige Material 20' mit den Kunststoffanteilen und dem Gleitmittel wird anschließend zwischen dem Unterstempel 12 und einem in den Füllraum geführten Oberstempel 11 gepresst, wobei z. B. der Unterstempel 12 stehen bleibt und nur der Oberstempel 11 zum Pressen nach unten verfahren wird, wie durch die nach unten gerichtete Pfeilspitze des oberen Doppelpfeils angedeutet ist. Bei einer mehrachsigen Pressmaschine ist es alternativ möglich, dass sich der Unterstempel 12 mit dem Oberstempel 11 beim Pressvorgang bewegt. Der mit dem Oberstempel 11 aufgebrachte Pressdruck richtet sich nach der gewünschten Pressdichte des Presslings und kann durch Voruntersuchungen genau ermittelt und auch noch während der Fertigungsvorgänge geregelt bzw. nachjustiert werden. Eine gängige Methode ist hierbei, die Überprüfung bzw. Überwachung der Pressdichte anhand des nachträglich gemessenen Gewichts des gepressten Formkörpers 20 durchzuführen. Die Pressdichte hängt dabei von verschiedenen Parametern ab, wie z. B. der Art des pulverförmigen Materials, beispielsweise eines Magnetpulvers, der Größe der Pulverteilchen, des Bindemittelanteils (Kunststoff, insbesondere Epoxidharz, dessen Anteil in der Regel bei derartigen kunststoffgebundenen Formkörpern zwischen 1 und 8 Gew.-% liegt) sowie der Art und der Menge des Gleitmittels ab.

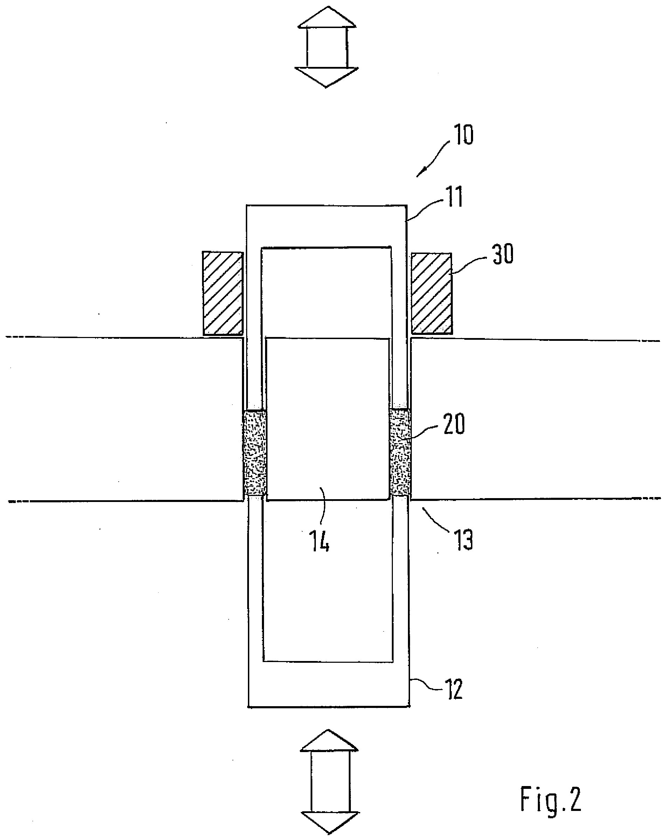

Wie Fig. 2 zeigt, ist der Hohlkörper 30, dessen innere Umfangskontur an die äußere Umfangskontur des Füllraums und damit auch des gepressten Formkörpers 20 angepasst ist, an der Oberseite der Matrize 13 so positioniert, dass seine Innenkontur und die Außenkontur des Füllraums in axialer Draufsicht zueinander konzentrisch und miteinander in Deckung gebracht sind. Diese Positionierung des Hohlkörpers 30 auf der Matrize 13 kann vor oder auch nach dem Pressvorgang erfolgen, bevor der gepresste Formkörper ausgeschoben wird.

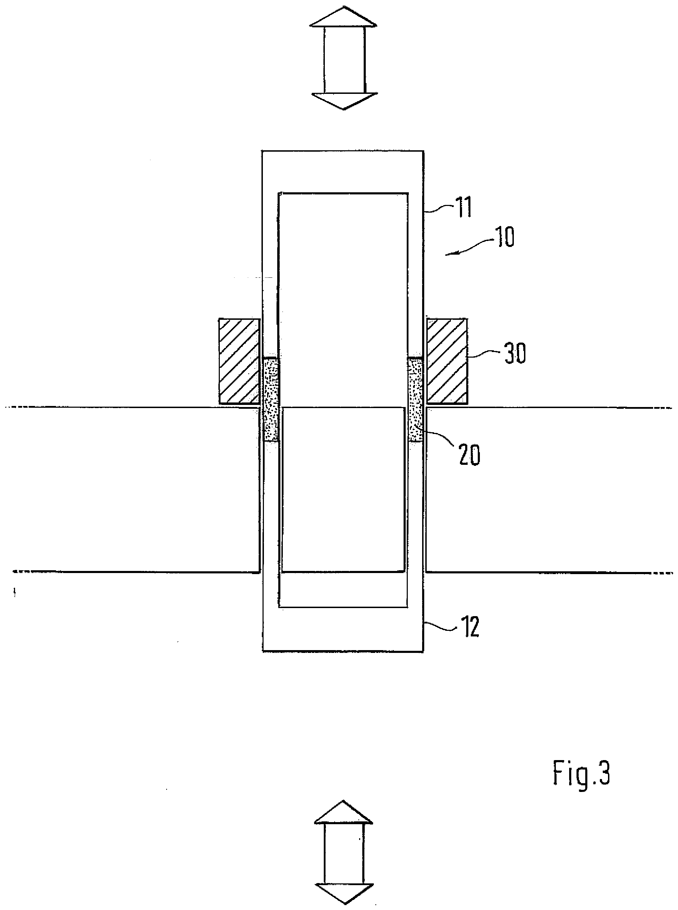

Fig. 3 zeigt das Ausschieben des gepressten Formkörpers 20 mittels des Unterstempels 12, der zum Ausschieben mit einer gewählten Verstellkraft bzw. gewähltem Druck beaufschlagt wird und dadurch nach oben bewegt wird, wie durch die obere Pfeilspitze des unteren Doppelpfeils angedeutet. Wie aus Fig. 3 ersichtlich, wird beim Herausschieben des gepressten Formkörpers 20 dieser in den Hohlkörper 30 eingefügt. Die Innenkontur des Hohlkörpers 30 ist auf die Außenkontur des gepressten Formkörpers so angepasst, dass dieser beim Austreten aus dem Füllraum der Matrize 13 glatt und unter Gleitreibung entlang der Innenfläche des Hohlkörpers 30 in diesen eingeschoben wird, bis die gewünschte Position in axialer Richtung erreicht ist. Bei dem Fügevorgang wird der Hohlkörper 30 mittels (nicht gezeigter) Haltemittel gehalten, so dass er axial nicht ausweichen kann. Die Gleitreibung beim Herausschieben des gepressten Formkörpers 20 aus der Matrize 13 und Einfügen in den Hohlkörper 30 wird durch das dem pulverförmigen Material 20' beigemischte Gleitmittel relativ gering gehalten, so dass kein zusätzliches Schmiermittel an den begrenzenden Wänden der Matrize 13 sowie der Innenfläche des Hohlkörpers 30 erforderlich ist.

Wie Fig. 3 weiter zeigt, ist der Oberstempel 11, wie es bei hülsenartigen Hohlkörpern 30 möglich ist, beim Herausschieben des gepressten Formkörpers 20 weiterhin unter gewissem Andruck auf dem gepressten Formkörper 20 gehalten und wird durch die höheren Verstellkräfte des Unterstempels mit dem gepressten Formkörper 20 nach oben bewegt, wie die obere Pfeilspitze des oberen Doppelpfeils andeutet. Durch den Andruck des Oberstempels 11 beim Herausschieben des gepressten Formkörpers 20 wird dieser vor Beschädigungen beim Herausschieben aus der Matrize 13 und Einfügen in den Hohlkörper 30 geschützt, bis er die gewünschte axiale Position erreicht hat. In dieser Lage kann, sofern z. B. bei besonderer Ausgestaltung des Hohlkörpers 30 und des gepressten Formkörpers 20 mit seinen Bestandteilen als zweckmäßig erachtet, der gepresste Formkörper 20 noch nachgepresst werden. Damit kann z. B. zusätzlich zu einer kraftschlüssigen Fixierung des in den Hohlkörper 30 eingefügten gepressten Formkörpers 20 noch eine formschlüssige Fixierung in an der Innenfläche des Hohlkörpers 30 ausgebildeten Strukturen durch Formschluss erzielt werden.

In vorteilhafter Ausgestaltung des Verfahrens wird beim Herausschieben des Formkörpers 20 aus der Matrize und Einführen in den Hohlkörper 30 das Innenteil 14 mit dem gepressten Formkörper 20 mitbewegt und erst nach der Einfügung des Formkörpers 20 in den Hohlraum aus dem Formkörper entfernt, und zwar vorzugsweise wieder nach unten geschoben.

Eine wesentliche Besonderheit des erläuterten Fügeprozesses besteht darin, dass sich der gepresste Formkörper 20 nach dem Einbringen an die vorgegebene Position des Hohlkörpers 30 entspannt und dabei (durch eine Art "Aufatmen") fest an die Innenfläche des Hohlkörpers 30 anfügt, wie sich in Untersuchungen der Erfinder gezeigt hat. Die Ausdehnung des Formkörpers 20 und kraftschlüssige Anfügung an die Innenfläche des Hohlkörpers wird dabei durch das beim Entspannungsvorgang noch in dem Formkörper 20 angeordnete Innenteil 14 unterstützt. Die beschriebene Vorgehensweise ergibt eine effiziente Fertigung des Bauteils aus Hohlkörper 30 und gepresstem Formkörper 20.

Nachdem der gepresste Formkörper 20 in den Hohlkörper 30 eingefügt ist, kann er an Ort und Stelle oder aber in einem nachfolgenden Fertigungsschritt an anderer Stelle der Aushärtung bei definierter Temperatur (z. B. in einem Temperaturbereich zwischen 140 und 160° C) und/oder durch UV-Bestrahlung (je nach gewähltem Bindemittel oder Zusätzen) unterzogen werden. Die Wärmezufuhr kann dabei mittels Wärmestrahlung, Wärmeleitung oder Konvektion erfolgen, etwa in einem Wärmeofen oder induktiv.

Ein weiteres Ausführungsbeispiel besteht darin, dass anstelle des hülsenartigen Hohlkörpers 30 mit an seinen axialen Enden gegenüberliegenden Öffnungen ein topfartiger Hohlkörper 30 verwendet und der gepresste Formkörper 20 in diesen eingefügt wird. Dabei erfolgt die Positionierung des als Topf ausgebildeten Hohlkörpers 30 auf der Matrize 13 nach dem Pressvorgang und das Einschieben des gepressten Formkörpers 20 in den Hohlkörper 30 erfolgt mit dem Unterstempel 12, ohne dass ein Gegendruck mit dem Oberstempel 11 ausgeübt wird.

Eine vorteilhafte Anwendung des Verfahrens besteht in der Auskleidung eines Hohlkörpers 30 mit einem gepressten kunststoffgebundenen magnetischen Formkörper. Derartige Bauteile können z. B. als Rotor eines elektrischen Motors oder als Teil einer Sensorvorrichtung eingesetzt bzw. weiterverarbeitet werden.

Gemäß der Erfindung erfolgt die Verdichtung des Materials mit einem sogenannten 2-Phasen-Pressen. Vorliegend wird dazu eine Kombination von kunststoffgebundenem Magnetwerkstoff mit magnetischen Pulverteilchen und kunststoffgebundenem Eisenpulver verwendet. Mit einem speziell ausgeführten Werkzeug werden in einem ersten Schritt die mit einem Bindemittel umhüllten bzw. vermischten magnetischen Pulverteilchen in der Matrize vorverdichtet. In einem weiteren Schritt wird das mit einem Bindemittel versehene Eisenpulver eingefüllt und ebenfalls vorverdichtet. Anschließend werden beide Teile in einem Pressvorgang wie vorstehend beschrieben endverdichtet, um einen mechanisch gut verzahnten Formkörper der beiden Werkstoffe zu erzielen. Anschließend wird der so als 2-phasiger Magnet hergestellte Formkörper 20 in den Hohlkörper 30 gefügt, wie vorstehend beschrieben.

Eine übliche Gestalt des Hohlkörpers 39 sind z. B. die genannte zylindrische Hülse oder der zylindrische Topf, wobei auch der gepresste Formkörper 20 eine hohlzylindrische Gestalt besitzen kann. Aber auch andere Querschnittskonturen kommen in Betracht, wie z. B. polygonale Formen (Dreieck, Quadrat, Rechteck, andere Mehrecke) oder elliptische Konturen. Vorzugsweise sind dabei die Querschnittskontur in Umfangsrichtung der Innenfläche des Hohlkörpers 30 sowie der Außenfläche des gepressten Formkörpers 20 senkrecht zu ihrer axialen Richtung über die axiale Ausdehnung gleichbleibend. Aber auch Formen mit geringer Verjüngung (bezüglich der Fig. 1 bis 3) nach unten oder oben sind denkbar.

Der auf die beschriebene Weise mit dem Formkörper 20 versehene Hohlkörper 30 kann vorteilhaft als magnetisches Funktionsteil verwendet werden. Beispielsweise ist bei einem solchen Funktionsteil in das Innere des Formkörpers 20 ein im Querschnitt kreisringförmiger oder vollzylindrischer Eisenkern eingesetzt.

## Patentansprüche

1. Verfahren zur Auskleidung der Innenfläche eines Hohlkörpers (30) mit einem aus pulverförmigem Material gepressten Formkörper (20), bei dem das mit einem Bindemittel versehene pulverförmige Material außer magnetischen Pulverteilchen Eisenpulver umfasst und in den Pressraum einer Matrize (13) gefüllt und darin gepresst wird, wobei
- ein 2-Phasen-Pressen zwischen einem Unterstempel (12) und einem Oberstempel (11) durchgeführt wird, indem in einem ersten Schritt die magnetischen Pulverteilchen mit dem Bindemittel vorverdichtet werden, in einem weiteren Schritt das Eisenpulver mit dem Bindemittel vorverdichtet wird und in einem nachfolgenden Schritt das Pressen des Formkörpers (20) unter Endverdichtung der vorverdichteten Teile erfolgt.
- vor oder nach dem so durchgeführten Pressen der Hohlkörper (30) bei in der Matrize (13) befindlichem Formkörper (20) bezüglich einer axialen Projektion den Pressraum mit seiner Innenfläche konzentrisch umfangsseitig umgebend über der Matrize (13) positioniert wird, wobei die Innenkontur des Hohlkörpers (30) und die Außenkontur des Pressraums miteinander in Deckung gebracht werden,
- anschließend der gepresste Formkörper (20) mittels des Unterstempels (12) glatt und unter Gleitreibung in den Hohlraum (31) geschoben wird und
- der gepresste Formkörper (20) durch sein Entspannen an der Innenfläche kraftschlüssig fixiert wird, wozu die Entspannung durch die Pressdichte beeinflusst wird, die in Abhängigkeit der Größe der Pulverteilchen, des Anteils an Epoxidharz, des Anteils an Bindemittel, des Anteils an Gleitmittel oder einer Kombination aus mindestens zweien dieser Bestandteile gewählt wird.

2. Verfahren nach Anspruch 1,
**dadurch gekennzeichnet,**
**dass** beim Einschieben mit dem Unterstempel der Oberstempel (11) mit Gegendruck auf dem Formkörper (20) gehalten wird.

3. Verfahren nach Anspruch 1 oder 2,
**dadurch gekennzeichnet,**
**dass** der Pressraum nach innen von einem Innenteil (14) begrenzt ist und dass der gepresste Formkörper (20) mittels des Unterstempels (12) in den Hohlraum (31) geschoben wird, wobei das Innenteil (14) mit dem gepressten Formkörper (20) mitbewegt und erst nach dem Einfügen des Formkörpers (20) in den Hohlkörper (31) aus dem Formkörper (20) entfernt wird.

4. Verfahren nach Anspruch 3,
**dadurch gekennzeichnet,**
**dass** das Einschieben des Formkörpers (20) unter Wirkung eines Gleitmittels durchgeführt wird.

5. Verfahren nach Anspruch 4,
**dadurch gekennzeichnet,**
**dass** als Gleitmittel ein dem pulverförmigen Material von vornherein zugegebenes Gleitmittel genutzt wird, mit dem auch eine innere Reibung zwischen den Pulverteichen verringert wird.

6. Verfahren nach einem der vorhergehenden Ansprüche,
**dadurch gekennzeichnet,**
**dass** als Bindemittel ein Epoxydharz verwendet wird, das die pulverförmigen Materialteilchen umhüllt oder mit diesen vermischt ist.

7. Verfahren nach einem der vorhergehenden Ansprüche,
**dadurch gekennzeichnet,**
**dass** der Formkörper (20) zusätzlich formschlüssig mittels an der Innenfläche des Hohlkörpers (30) vorhandener Rauigkeit oder gebildeter griffiger Strukturen fixiert wird.

8. Verfahren nach einem der vorhergehenden Ansprüche,
**dadurch gekennzeichnet,**
**dass** die Pressdichte des Formkörpers (20) anhand des Gesamtgewichts aus Hohlkörper (30) und Formkörper (20) bei bekanntem oder zuvor gemessenem Gewicht des Hohlkörpers (30) festgestellt wird.

9. Verfahren nach Anspruch 8,
**dadurch gekennzeichnet,**
**dass** die Pressdichte unter Vergleich mit einer Soll-Pressdichte überwacht, geregelt oder nachjustiert wird.

10. Verfahren nach einem der vorhergehenden Ansprüche,
**dadurch gekennzeichnet,**
**dass** im Anschluss an das Fixieren des Formkörpers (20) in dem Hohlkörper (30) ein Aushärtevorgang mittels Erwärmung und/oder UV-Bestrahlung durchgeführt wird.

11. Verfahren nach Anspruch 10,
**dadurch gekennzeichnet,**
**dass** die Erwärmung in einem Ofen durch Wärmestrahlung, Konvektion und/oder Wärmeleitung oder induktiv vorgenommen wird.

12. Anwendung des Verfahrens nach einem der vorhergehenden Ansprüche, **dadurch gekennzeichnet,**
**dass** der Hohlkörper (30) eine Hülse oder ein Topf zumindest mit einem zylinderförmigen Hohlraum (31) ist.

13. Anwendung nach Anspruch 12,
**dadurch gekennzeichnet,**
**dass** in den Formkörper (20) ein Eisenkern eingesetzt ist.

## Claims

1. Method for lining the inner surface of a hollow body (30) with a molded body (20) pressed from powdered material, in which method the powdered material which is provided with a binder comprises iron powder in addition to magnetic powder particles and is poured into and pressed in the pressing space of a die (13), wherein
- a 2-phase pressing is carried out between a lower punch (12) and an upper punch (11) by pre-compressing the magnetic powder particles together with the binder in a first step, pre-compressing the iron powder together with the binder in a further step and pressing the molded body (20) by carrying out a final compression of the pre-compressed parts in a subsequent step,
- before or after the pressing carried out in this manner, the hollow body (30), when the molded body (20) is located in the die (13), is positioned over the die (13) with respect to an axial projection such that the inner surface of the hollow body surrounds the pressing space concentrically and circumferentially, wherein the inner contour of the hollow body (30) and the outer contour of the pressing space are brought into alignment with one another,
- the pressed molded body (20) is then pushed smoothly and under sliding friction into the cavity (31) by means of the lower punch (12) and
- the pressed molded body (20) is non-positively fixed on the inner surface by expanding, for which purpose the expansion is influenced by the pressing density which is selected depending on the size of the powder particles, the proportion of epoxy resin, the proportion of binder, the proportion of lubricant or a combination of at least two of these components.

2. Method according to claim 1, **characterized in that** the upper punch (11) is held on the molded body (20) by means of counter pressure when the lower punch is pushed in.

3. Method according to either claim 1 or claim 2, **characterized in that** the pressing space is delimited inwards by an inner part (14) and **in that** the pressed molded body (20) is pushed into the cavity (31) by means of the lower punch (12), the inner part (14) moving together with the pressed molded body (20) and only being removed from the molded body (20) after the molded body (20) has been inserted into the hollow body (31).

4. Method according to claim 3, **characterized in that** the molded body (20) is pushed in under the effect of a lubricant.

5. Method according to claim 4, **characterized in that** a lubricant added to the powdered material at the outset is used as a lubricant, by means of which lubricant an internal friction between the powder particles is also reduced.

6. Method according to any of the preceding claims, **characterized in that** an epoxy resin which coats the powdered material particles or is mixed therewith is used as a binder.

7. Method according to any of the preceding claims, **characterized in that** the molded body (20) is also positively fixed by means of roughness or non-slip structures formed on the inner surface of the hollow body (30).

8. Method according to any of the preceding claims, **characterized in that** the pressing density of the molded body (20) is determined based on the total weight of the hollow body (30) and the molded body (20) using a known or previously measured weight of the hollow body (30).

9. Method according to claim 8, **characterized in that** the pressing density is monitored, regulated or readjusted by comparison with a target pressing density.

10. Method according to any of the preceding claims, **characterized in that** after the molded body (20) is fixed in the hollow body (30), a curing process is carried out by means of heating and/or UV radiation.

11. Method according to claim 10, **characterized in that** the heating is carried out in a furnace by means of heat radiation, convection and/or heat conduction or inductively.

12. Use of the method according to any of the preceding claims, **characterized in that** the hollow body (30) is a sleeve or a pot at least having a cylindrical cavity (31).

13. Use according to claim 12, **characterized in that** an iron core is inserted into the molded body (20).

## Revendications

1. Procédé de revêtement de la surface intérieure d'un corps creux (30) comportant un corps moulé (20) pressé constitué d'un matériau pulvérulent, le matériau pulvérulent pourvu d'un liant comprenant de la poudre de fer en plus des particules de poudre magnétiques, et étant rempli dans la chambre de pressage d'une matrice (13), puis pressé à l'intérieur de celle-ci, dans lequel
- un pressage en deux phases est effectué entre un poinçon inférieur (12) et un poinçon supérieur (11) en précompressant les particules de poudre magnétiques avec le liant à une première étape, en précompressant la poudre de fer avec le liant à une autre étape, et le pressage du corps moulé (20) étant réalisé à une étape suivante, par compactage final des pièces précomprimées,
- avant ou après le pressage du corps creux (30) ainsi réalisé au niveau du corps moulé (20) se trouvant dans la matrice (13), la chambre de pressage est positionnée, par rapport à une projection axiale, avec sa surface intérieure entourant concentriquement la matrice (13) sur le côté périphérique, le contour intérieur du corps creux (30) et le contour extérieur de la chambre de pressage étant alignés l'un avec l'autre,
- le corps moulé pressé (20) est ensuite poussé en douceur et par frottement de glissement dans la cavité (31) au moyen du poinçon inférieur (12), et
- le corps moulé pressé (20) est fixé à force par son relâchement sur la surface intérieure, le relâchement étant influencé par la densité de pressage choisie en fonction de la taille des particules de poudre, de la proportion de résine époxy, de la proportion de liant, de la proportion de lubrifiant ou d'une combinaison d'au moins deux de ces composants.

2. Procédé selon la revendication 1, **caractérisé en ce que** le poinçon supérieur (11) est maintenu avec une contre-pression sur le corps moulé (20) lorsqu'il est inséré avec le poinçon inférieur.

3. Procédé selon la revendication 1 ou 2, **caractérisé en ce que** la chambre de pressage est délimitée vers l'intérieur par une partie intérieure (14), et **en ce que** le corps moulé (20) pressé est poussé dans la cavité (31) au moyen du poinçon inférieur (12), la partie intérieure (14) se déplaçant avec le corps moulé (20) pressé et n'étant retirée du corps moulé (20) qu'après insertion du corps moulé (20) dans le corps creux (31).

4. Procédé selon la revendication 3, **caractérisé en ce que** l'insertion du corps moulé (20) est réalisée sous l'effet d'un lubrifiant.

5. Procédé selon la revendication 4, **caractérisé en ce qu'**un lubrifiant ajouté au matériau pulvérulent dès le départ est utilisé comme lubrifiant, lequel lubrifiant ajouté permet également de réduire un frottement interne entre les particules de poudre.

6. Procédé selon l'une des revendications précédentes, **caractérisé en ce qu'**une résine époxy est utilisée comme liant, laquelle résine époxy enveloppe les particules de matériau pulvérulent ou est mélangée avec celles-ci.

7. Procédé selon l'une des revendications précédentes, **caractérisé en ce que** le corps moulé (20) est en outre fixé par complémentarité de forme au moyen de rugosités ou de structures antidérapantes formées sur la surface intérieure du corps creux (30).

8. Procédé selon l'une des revendications précédentes, **caractérisé en ce que** la densité de pressage du corps moulé (20) est déterminée sur la base du poids total du corps creux (30) et du corps moulé (20) le poids du corps creux (30) étant connu ou préalablement mesuré.

9. Procédé selon la revendication 8, **caractérisé en ce que** la densité de pressage est surveillée, régulée ou réajustée par rapport à une densité de pressage cible.

10. Procédé selon l'une des revendications précédentes, **caractérisé en ce que**, suite à la fixation du corps moulé (20) dans le corps creux (30), une opération de durcissement est réalisée au moyen d'un chauffage et/ou d'un rayonnement ultraviolet.

11. Procédé selon la revendication 10, **caractérisé en ce que** le chauffage est effectué dans un four par rayonnement thermique, par convection et/ou par conductivité thermique ou par induction.

12. Mise en œuvre du procédé selon l'une des revendications précédentes, **caractérisée en ce que** le corps creux (30) est un manchon ou un pot comportant au moins une cavité cylindrique (31).

13. Mise en œuvre selon la revendication 12, **caractérisée en ce qu'**un noyau de fer est inséré dans le corps moulé (20).
